# EUROPEAN PATENT SPECIFICATION

(11) **EP 1 092 525 B1**
(45) Date of publication and mention of the grant of the patent: **30.05.2007**
(21) Application number: 00203578.0
(22) Date of filing: 13.10.2000
(51) Int. Cl.: B29C 45/33, B29C 45/44

(54) **Injection mould assembly**
Spritzgiessformzusammenbau
Assemblage de moule d'injection

(30) Priority: 14.10.1999 NL 1013295
(43) Date of publication of application: 18.04.2001
(73) Proprietor: Fijn Metaal Almere, 1351 KJ Almere (NL)
(72) Inventor: Bitter, Laembert, 1351 KJ Almere (NL)
(74) Representative: van Westenbrugge, Andries

(56) References cited:
- EP-A- 0 351 030
- EP-A- 0 381 023
- EP-A- 0 546 950
- NL-C- 1 008 865
- US-A- 3 049 759

## Description

The present invention relates to an injection mould assembly according to the preamble of claim 1. Such an injection mould assembly is known from EP 0381023. In this specification a method for producing a flower pot is disclosed, wherein a circumferential ring is flapped over after moulding.

The Netherlands patent 1008865 in the name of the patent proprietor describes an assembly of this nature in which it is no longer necessary for the circumferential rim which has been moulded on and has to function as a saucer in the finished product to be flanged separately outside the mould in a separate operation after the injection-moulding has taken place. Prior to the filing date of the above patent, such an operation was required and was carried out either by machine or by hand.

EP 0351030 discloses a method for injection moulding of a plant container having a circumferential ring, in which the space between the ring and sidewall of the container is shaped such that a releasable mould portion cannot be removed therefrom.

US 3049759 discloses a method for producing clips, in which a non-releasable shape is used. By moving away mould portions space is realised for a non-releasable mould portion to be removed from the clip moulded.

The object of the present invention is to improve the design shown in that patent still further and to simplify this design so that even flanging in the mould, as proposed in the above Dutch Patent 1008865, is no longer required.

After all, if this step can be avoided, the cycle time can be increased further. In an injection mould assembly as described above, this object is achieved by the fact that the said fourth mould part is of non-detachable design.

According to the invention this is realised with the features of claim 1.

According to the invention a non-detachable mould part is placed in the space between the side wall - base transition and the associated saucer. However, this part is not designed to be so large that flanging is required subsequently. Then, according to the invention, when the mould is opened firstly space is created in order to move the non-detachable part away. Then, the non-detachable part is moved back, during which process the circumferential rim which has just been moulded allows the non-detachable part to move past resiliently and, after this part has passed through, the rim moves back to the desired final position. It should be understood that instead of a circumferential rim it is possible to mould any other projecting part onto a container or similar product.

Movement of the auxiliary mould part or auxiliary block or fourth mould part takes place substantially in a direction which is perpendicular to the mutual direction of movement of the first and third mould parts, that is to say perpendicular to the opening and closing direction of the mould assembly. In principle, the fourth mould part may be composed of two auxiliary parts, but according to an advantageous embodiment there are at least four auxiliary parts. Various movements can be implemented in any way which is known in the prior art. According to an advantageous embodiment of the invention, the various mould parts are coupled to one another in such a manner that, when the mould assembly is opened, firstly the third part is displaced with respect to the other mould parts, and then the fourth mould part is moved out of the space between the circumferential rim and the outer circumferential wall.

The coupling described above may comprise any mechanical coupling, such as a guide pin which extends from the third mould part and extends, at an angle to the opening direction of the mould, away from the axis of the opening movement. This pin engages in an opening in the fourth mould part. The opening is preferably larger than the diameter of the pin, so that during the first stage of opening of the mould, the pin ensures that as yet the fourth mould part remains unaffected.

The invention will be explained in more detail below with reference to an exemplary embodiment which is illustrated in the drawing, in which:
Fig. 1 shows a cross section through an injection mould according to the invention;
Fig. 2-6 show a detail of the injection mould shown in Fig. 1 during various stages of the injection-moulding; and
Fig. 7 shows a product which is obtained using the injection mould shown in Fig. 1-6.

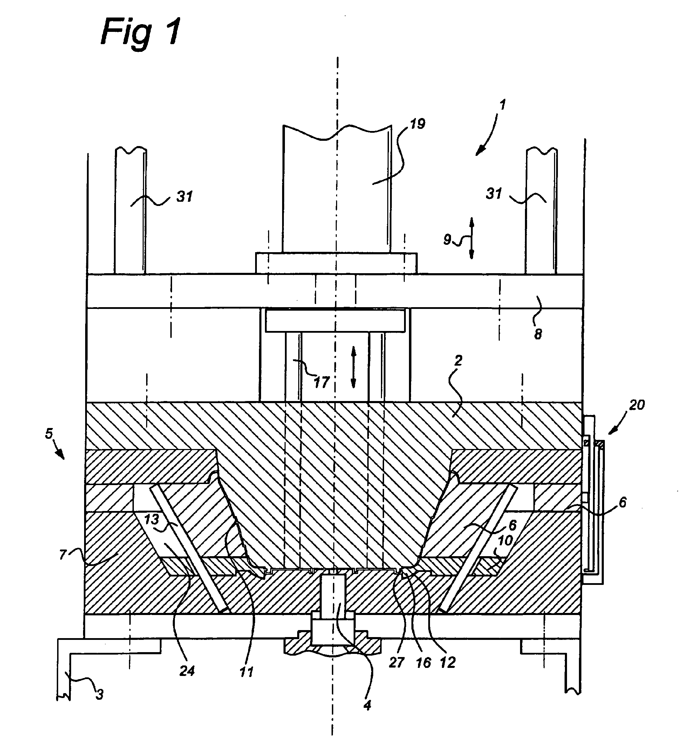

Fig. 1 shows an injection mould which is denoted overall by 1. It comprises a core 2 and a housing assembly 5. Core 2 is immovably connected to the machine bed 3 of an injection-moulding machine, which is not shown in more detail. A gate 4, which is connected in the usual way to the gate on the injection-moulding machine, extends through core 2. Gate 4 is designed as a hot runner.

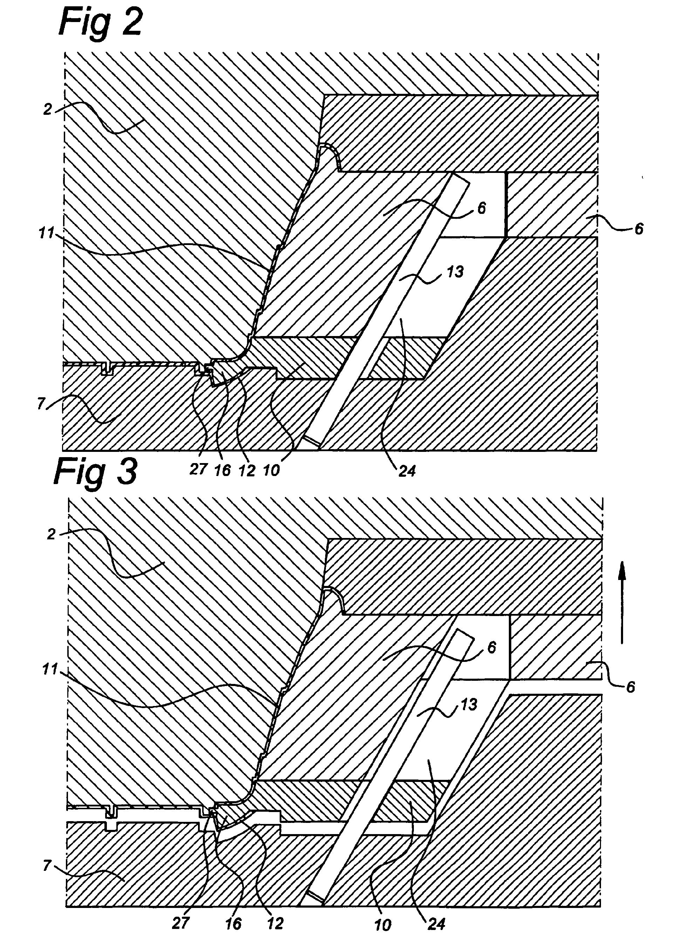

Housing assembly 5 is composed of an (engraving) block 6 and a shell 7, which are displaceable with respect to one another. Shell 7 is attached to platen 8, which forms part of the injection-moulding machine and can be moved in a reciprocating manner with respect to core 2 in the direction of arrow 9 in the customary way using jack 19. Four auxiliary blocks, which can be displaced to and fro in the radial direction, that is to say perpendicular to the direction of the arrow 9, are denoted by 10. They are provided with projections 27 (cf. also Fig. 2-6) for forming recesses in the product which is to be moulded. The reciprocating movement of auxiliary blocks 10 is controlled by transport pin 13 which is accommodated in opening 24 of the auxiliary blocks 10 and is fixedly connected to shell 7. There are means (not shown in more detail) which ensure that, although the auxiliary blocks 10 can slide with respect to engraving block 6, they cannot be detached therefrom. This can be achieved with the aid of grooves and a guide pin. Ejector means (not shown in more detail) are present.

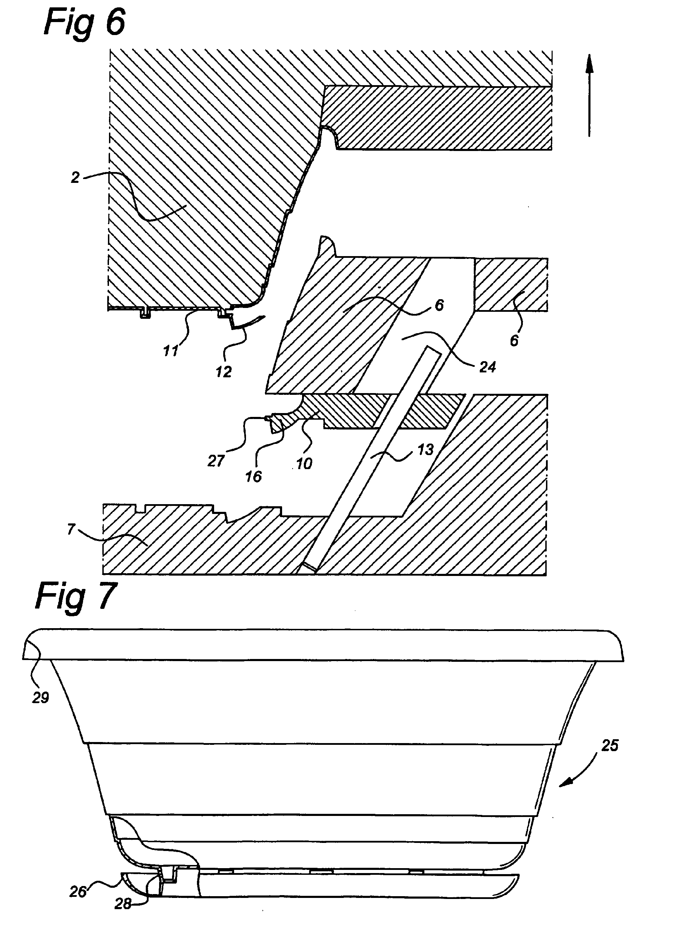

Fig. 7 shows the product which is to be produced using this injection mould. The example shown here is a flowerpot, which is denoted overall by 25. 26 denotes a circumferential lip, and 28 denotes an opening in the vicinity of this lip. The top circumferential rim of the product is denoted by 29.

The mould described above operates as follows:
Fig. 1 shows the mould in the closed position. A mould cavity 11 is delimited between core 2, block 6, auxiliary block 10 and shell 7. Moreover, a space 12 is delimited by auxiliary block 10 and shell 7. This part forms the "disc" of the pot described above.
Fig. 2-6 show a detail of the injection-moulding device shown in Fig. 1, and the further process for the injection-moulding will be described on the basis of these details.

In the position shown in Fig. 2, plastic is introduced into the mould cavities 11 and 12 via gate 4. This material will solidify rapidly, if appropriate as a result of the presence of cooling channels.

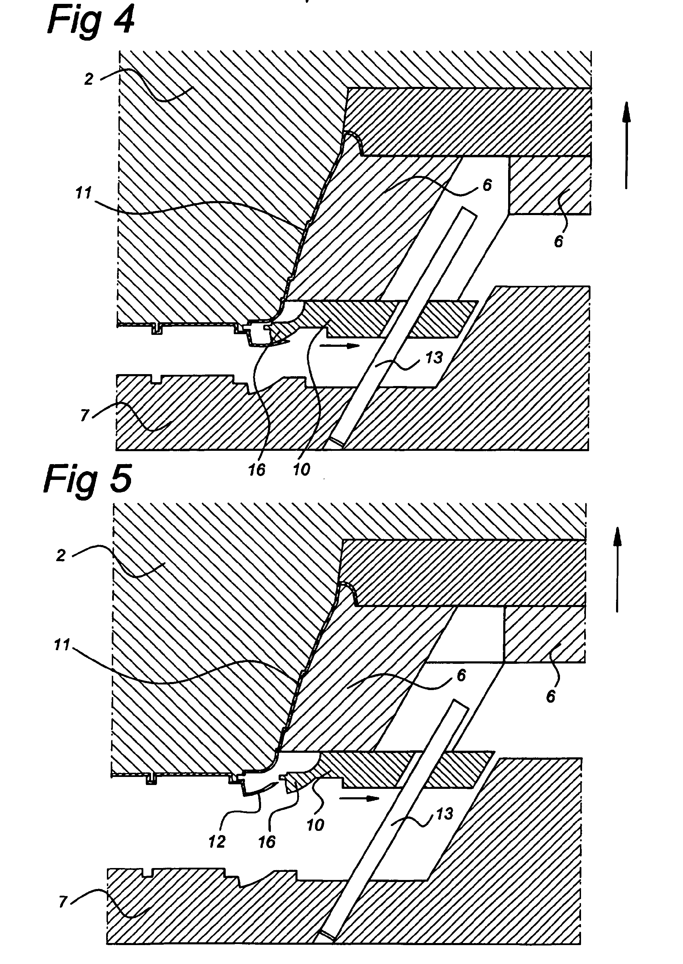

Then, the first stage of opening takes place as illustrated in Fig. 3. During this stage, platen 8 is moved away from the fixed part, shell 7 moving with it. Since the opening 24 is slightly larger than the diameter of the pin and this clearance is situated to the right of pin 13, as seen in Fig. 2, during the initial opening, when the pin 13 is displaced with respect to auxiliary block 10, this will at first have no effect on this auxiliary block 10. In the situation shown in Fig. 3, the right-hand part of pin 13 comes to bear against the right-hand limit of opening 24 of auxiliary block 10.

When the mould opens further, not only is shell 7 moved away from the product which has just been moulded, but also the auxiliary blocks 10 (of which there are four) are forced to move radically outwards. Since shell 7 is at a certain distance from auxiliary block 10, it is possible for the non-detachable part 16 to move to the right. In the process, the part 12 which has just been produced by injection-moulding is to some degree moved outwards resiliently, as can be seen clearly from Figure 4.

As the mould is opened further, the non-detachable part 16 moves entirely out of the region of part 12 of the product which has just been moulded. This situation is illustrated in Fig. 5. Ultimately, the state illustrated in Fig. 6 is reached, after which the product can be ejected in any way which is known in the prior art.

The mould described above can be used to mould on a circumferential ring 26 in a single operation. Consequently, it is not necessary for this ring to be attached subsequently as is known in the prior art.

Moreover, it is no longer necessary for this circumferential ring 26 to be flanged, as is known in other proposals according to the prior art. In these proposals, this flanging operation took place both inside and outside the mould. Particularly in the case of flanging carried out outside the mould, this was a laborious operation, since it required a separate machine or separate staff.

Although the invention has been described above on the basis of a preferred embodiment, it will be obvious to persons skilled in the art that it is possible to make changes without departing from the scope of the present application, which changes lie within the scope of the appended claims.

## Claims

1. Injection mould assembly (1) for the injection-moulding of a container (25) which is provided with a circumferential rim (26), such as a saucer, which mould assembly comprises at least three parts, a first part (2) which delimits the interior of the container, a second part (6) which delimits the outer circumferential wall of the container, and a third part (7) which delimits the outer base of the container, the said three parts being displaceable with respect to one another in order to delimit the mould cavity (11, 12) for the said container and to allow the container to be detached, a fourth mould part (10) being present, which can move with respect to the said first-third (2, 7) mould parts and delimits the space between the transition from the outer circumferential wall - circumferential rim, which fourth mould part comprises at least two auxiliary parts (10) and of non-releasable design, **characterized in that** said fourth mould part is arranged so as to be displaceable substantially perpendicular to the mutual direction of movement (9) of the first and third mould parts, means are provided to ensure that the auxiliary parts (10) are slidable and non-detachable relative to the second mould part (6), said third mould part (7) is movable in the direction of opening/closing of said mould and is adjacent to the fourth mould part.

2. Mould assembly according to claim 1, wherein said fourth mould part comprises at least four auxiliary parts.

3. Mould assembly according to one of the preceding claims, in which the various mould parts are coupled to one another in such a manner that, when the mould assembly is opened, firstly the third part (7) is displaced with respect to the other mould parts, and then the fourth mould part (10) is moved out of the space between the circumferential rim and the outer circumferential wall.

4. Mould assembly according to Claim 3, in which, after the third mould part has been displaced further, the second mould part (6) is displaced away from the circumferential wall.

5. Mould assembly according to Claim 3 or 4, in which the said coupling comprises a guide pin (13) which extends away from the third mould part (7) and also extends, at an angle to the direction of displacement, away from the said direction of displacement of the said third mould part, as well as an opening (24) in the said fourth mould part, which opening accommodates the pin.

6. Mould assembly according to Claim 5, in which the said opening (24), in the direction of displacement of the said fourth mould part, is designed to be larger than the diameter of the pin.

## Patentansprüche

1. Formaufbau (1) zum Spritzgießen eines Behälters (25), der mit einem umlaufenden Rand (26), wie einem Untersetzer, versehen ist, wobei der Formaufbau zumindest drei Teile umfasst, ein erstes Teil (2), welches den Innenraum des Behälters begrenzt, ein zweites Teil (6), welches die äußere umlaufende Wand des Behälters begrenzt, und ein drittes Teil (7), welches den äußeren Boden des Behälters begrenzt, wobei die genannten drei Teile gegeneinander verschiebbar sind, um den Formhohlraum (11, 12) für den genannten Behälter zu begrenzen und die Entnahme des Behälters zu ermöglichen, wobei ein viertes Formteil (10) vorhanden ist, welches im Bezug auf die genannten ersten bis dritten (2, 7) Formteile bewegt werden kann und welches den Raum zwischen dem Übergang von der äußeren Umfangswand und dem Umfangsrand begrenzt und wobei dieses vierte Formteil zumindest zwei Hilfsteile (10) von einer nichtlösbaren Konstruktion umfasst, **dadurch gekennzeichnet, dass** das vierte Formteil dergestalt ausgeführt ist, dass es im wesentlichen senkrecht zu der gegenseitigen Bewegungsrichtung (9) des ersten und dritten Formteils verschiebbar ist, und Vorrichtungen vorgesehen sind, um sicherzustellen, dass die Hilfsteile (10) gleitbar und nicht-entfernbar im Bezug auf das zweite Formteil (6) sind, und das genannte dritte Formteil (7) in Richtung des Öffnens/Schließens der genannten Form beweglich ist und dem vierten Formteil benachbart ist.

2. Formaufbau nach Anspruch 1, wobei das genannte vierte Formteil mindestens vier Hilfsteile umfasst.

3. Formaufbau nach einem der vorhergehenden Ansprüche, wobei die verschiedenen Formteile dergestalt aneinander gekoppelt sind, dass, wenn der Formaufbau geöffnet wird, zuerst das dritte Teil (7) im Bezug auf die anderen Formteile verschoben ist und dann das vierte Formteil (10) aus dem Raum zwischen dem Umfangsrand und der äußeren Umfangswand hinausbewegt wird.

4. Formaufbau nach Anspruch 3, wobei das zweite Formteil (6) von der Umfangswand weg verschoben wird, nachdem das dritte Formteil weiter verschoben worden ist.

5. Formaufbau nach Anspruch 3 oder 4, wobei die genannte Kopplung einen Führungsstift (13), der sich von dem dritten Formteil (7) weg erstreckt und sich ebenfalls in einem Winkel zu der Verschiebungsrichtung weg erstreckt von der genannten Verschiebungsrichtung des genannten dritten Formteils, sowie eine Öffnung (24) in dem genannten vierten Formteil umfasst, wobei diese Öffnung den Stift aufnimmt.

6. Formaufbau nach Anspruch 5, wobei die genannte Öffnung (24) in Verschiebungsrichtung des genannten vierten Formteils so gestaltet ist, dass sie größer ist als der Durchmesser des Stiftes.

## Revendications

1. Assemblage d'un moule d'injection (1) pour le moulage par injection d'un récipient (25) qui est prévu avec un rebord (26) circonférentiel, par exemple une soucoupe, ledit assemblage possédant au moins trois parties, une première partie (2) qui délimite l'intérieur du récipient, une deuxième partie (6) qui délimite la paroi circonférentielle extérieure du récipient, et une troisième partie (7) qui délimite la base extérieure du récipient, lesdites trois parties pouvant être déplacées l'une par rapport à l'autre afin de délimiter la cavité du moule (11,12) pour ledit récipient et de permettre le démoulage du récipient, une quatrième partie du moule (10) étant présente, celle-ci étant mobile par rapport aux trois premières parties (2,7) et délimitant l'espace compris entre la paroi circonférentielle extérieure et le rebord circonférentiel, ladite quatrième partie comprenant au moins deux parties auxiliaires (10) dont le plan ne peut être dévoilé, **caractérisée par le fait que** ladite quatrième partie est conçue de manière à être déplaçable de façon sensiblement perpendiculaire à l'axe de mouvement mutuel (9) des première et troisième parties du moule, des moyens étant prévus pour assurer que les parties auxiliaires (10) puissent glisser sans se détacher par rapport à la deuxième partie du moule (6), ladite troisième partie (7) étant mobile dans la direction d' ouverture/fermeture dudit moule et étant adjacente à la quatrième partie du moule.

2. Assemblage de moule selon la revendication 1, dans lequel ladite quatrième partie comprend au moins quatre parties auxiliaires.

3. Assemblage de moule selon l'une des revendications précédentes, dans lequel les différentes parties du moule sont couplées l'une à l'autre de telle sorte que, lorsque l'assemblage du moule est ouvert, tout d'abord la troisième partie (7) est déplacée par rapport aux autres parties du moule, et ensuite la quatrième partie du moule (10) est déplacée hors de l'espace compris entre le rebord circonférentiel et la paroi circonférentielle extérieure.

4. Assemblage de moule selon la revendication 3, dans lequel, après que la troisième partie du moule a été déplacée davantage, la deuxième partie du moule (6) est éloignée de la paroi circonférentielle.

5. Assemblage de moule selon les revendications 3 ou 4, dans lequel ledit couplage comprend une tige de guidage (13) qui se prolonge en s'éloignant de la troisième partie du moule (7) et se prolonge également, en formant un angle avec la direction de déplacement, en s'éloignant de ladite direction de déplacement de la troisième partie du moule, ainsi qu'une ouverture (24) dans ladite quatrième partie du moule, ladite ouverture accueillant la tige.

6. Assemblage de moule selon la revendication 5, dans lequel ladite ouverture (24), dans la direction de déplacement de ladite quatrième partie, est conçue pour être plus grande que le diamètre de la tige.
